# EUROPEAN PATENT APPLICATION

(11) **EP 4 761 250 A1**
(43) Date of publication of application: **17.06.2026**
(21) Application number: 24851002.6
(22) Date of filing: 06.08.2024
(51) Int. Cl.: H04N 21/431, G06F 9/451, G06F 3/0481, H04N 21/488

(54) **MEDIA CONTENT PRESENTATION METHOD AND APPARATUS, AND DEVICE, READABLE STORAGE MEDIUM AND PRODUCT**

(30) Priority: 07.08.2023 CN 202310988043
(71) Applicant: Beijing Zitiao Network Technology Co., Ltd., Beijing 100190 (CN)
(72) Inventor: DUAN, Yunshan, Beijing 100028 (CN); WANG, Tingting, Beijing 100028 (CN); TANG, Yuxi, Beijing 100028 (CN); TANG, Bo, Beijing 100028 (CN); FANG, Yuanxiang, Beijing 100028 (CN); XUAN, Hui, Beijing 100028 (CN)
(74) Representative: Marks & Clerk LLP
(86) International application number: PCT/CN2024/110097
(87) International publication number: WO 2025/031357

(57) **Abstract**

Provided in the embodiments of the present disclosure are a media content presentation method and apparatus, and a device, a readable storage medium and a product. The method comprises: in response to a preset trigger operation of the current user, displaying a preset media content presentation interface, wherein the media content presentation interface comprises a plurality of pieces of media content in a preset media content stream, the media content stream comprises at least one piece of target media content associated with a target object, and the plurality of pieces of media content are adjacent pieces of media content in the preset media content stream; and for each piece of target media content, if it is detected that the target media content meets a preset presentation condition, presenting, in a presentation region in the media content presentation interface that is associated with the target media content, a trigger control associated with the target object, wherein the trigger control is configured to trigger the execution of an interactive operation associated with the target object.

## Description

The present application claims the priority to Chinese Patent Application No. 202310988043.4, filed on August 7, 2023, the entire disclosure of which is incorporated herein by reference as part of the present application.

### TECHNICAL FIELD

Embodiments of the present disclosure relate to a media content display method and apparatus, a device, a readable storage medium, and a product.

### BACKGROUND

The current media content display interface generally displays only media content and an interactive control associated with the media content, allowing the user to perform interactive operations such as liking, commenting, and adding to favorites on the media content by using the interactive control. However, content displayed by using the current media content display method is usually limited, and the interaction mode is simplistic, failing to meet the actual requirement of the user.

### SUMMARY

Embodiments of the present disclosure provide a media content display method and apparatus, a device, a readable storage medium, and a product, to solve a technical problem that content displayed by using the current media content display method is usually limited, and the interaction mode is simplistic.

In a first aspect, an embodiment of the present disclosure provides a media content display method. The method includes:
displaying a preset media content display interface in response to a preset trigger operation of a current user, where the media content display interface includes a plurality of pieces of media content in a preset media content stream, the media content stream includes at least one piece of target media content associated with a target object, and the plurality of pieces of media content are adjacent pieces of media content in the preset media content stream; and
for each piece of target media content, displaying, in a display area that is in the media content display interface and that is associated with the target media content, a trigger control associated with the target object in response to detecting that the target media content meets a preset display condition, where the trigger control is configured to trigger the performing of an interactive operation associated with the target object.

In a second aspect, an embodiment of the present disclosure provides a media content display apparatus. The apparatus includes:
a display module configured to display a preset media content display interface in response to a preset trigger operation of a current user, where the media content display interface includes a plurality of pieces of media content in a preset media content stream, the media content stream includes at least one piece of target media content associated with a target object, and the plurality of pieces of media content are adjacent pieces of media content in the preset media content stream; and
a processing module configured to, for each piece of target media content, display, in a display area that is in the media content display interface and that is associated with the target media content, a trigger control associated with the target object in response to detecting that the target media content meets a preset display condition, where the trigger control is configured to trigger the performing of an interactive operation associated with the target object.

In a third aspect, an embodiment of the present disclosure provides an electronic device. The electronic device includes: a processor and a memory.

The memory stores a computer-executable instruction.

The processor executes the computer-executable instruction stored in the memory, to cause the at least one processor to perform the media content display method according to the first aspect and various possible designs of the first aspect.

In a fourth aspect, an embodiment of the present disclosure provides a computer-readable storage medium. The computer-readable storage medium has a computer-executable instruction stored thereon that, when executed by a processor, cause the media content display method according to the first aspect and various possible designs of the first aspect to be implemented.

In a fifth aspect, an embodiment of the present disclosure provides a computer program product including a computer program. When the computer program is executed by a processor, the media content display method according to the first aspect and various possible designs of the first aspect is implemented.

### BRIEF DESCRIPTION OF DRAWINGS

To describe the technical solutions in embodiments of the present disclosure more clearly, the accompanying drawings for describing the embodiments are briefly described below. Apparently, the accompanying drawings in the following description are some embodiments of the present disclosure, and those of ordinary skill in the art may still derive other accompanying drawings from these accompanying drawings without creative efforts.
Fig. 1 is a schematic flowchart of a media content display method according to an embodiment of the present disclosure;
Fig. 2 is a schematic diagram of a display interface according to an embodiment of the present disclosure;
Fig. 3 is a schematic diagram of an interface interaction according to an embodiment of the present disclosure;
Fig. 4 is a schematic diagram of another interface interaction according to an embodiment of the present disclosure;
Fig. 5 is a schematic diagram of another interface interaction according to an embodiment of the present disclosure;
Fig. 6 is a schematic structural diagram of a media content display apparatus according to an embodiment of the present disclosure; and
Fig. 7 is a schematic structural diagram of an electronic device according to an embodiment of the present disclosure.

### DETAILED DESCRIPTION

To make the objectives, technical solutions, and advantages of embodiments of the present disclosure clearer, the technical solutions in the embodiments of the present disclosure are described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without any creative effort shall fall within the scope of protection of the present disclosure.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

In an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

To solve a technical problem that content displayed by using the current media content display method is usually limited, and the interaction mode is relatively simplistic, the present disclosure provides a media content display method and apparatus, a device, a readable storage medium, and a product.

It should be noted that the media content display method and apparatus, the device, the readable storage medium, and the product provided in the present disclosure may be applied in any application scenario of media content display.

Generally, only a single piece of media content and an interactive control associated with the media content are displayed in the current media content display interface, so that the user can perform interactive operations such as liking, commenting, adding to favorites, and sharing on the media content by using the interactive control. However, display content and an interaction mode in the media content display interface are usually simplistic, resulting in a poor interaction effect.

To diversify the display content in the media content display interface, for each piece of media content, in response to detecting that target media content meets a preset display condition, a trigger control associated with a target object is displayed in a display area that is in the media content display interface and that is associated with the target media content. To diversify the interaction mode in the media content display interface, the user may perform a trigger operation on the trigger control. An interactive operation associated with the target object can be performed in response to the trigger operation.

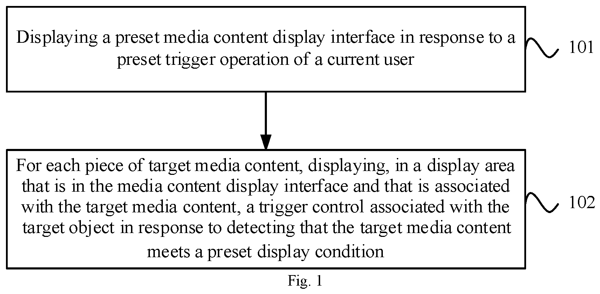

Fig. 1 is a schematic flowchart of a media content display method according to an embodiment of the present disclosure. As shown in Fig. 1, the method includes the following steps.

Step 101: displaying a preset media content display interface in response to a preset trigger operation of a current user. The media content display interface includes a plurality of pieces of media content in a preset media content stream. The media content stream includes at least one piece of target media content associated with a target object. The plurality of pieces of media content are adjacent pieces of media content in the preset media content stream.

The execution entity of this embodiment is a media content display apparatus. The media content display apparatus may be coupled to a terminal device, so that media content can be displayed based on a trigger operation of a user. Alternatively, the media content display apparatus may be coupled to a server communicatively connected to a terminal device, so that a media content display request that is sent by the terminal device based on a trigger operation of a user can be obtained, and the terminal device can be controlled to display media content based on the media content display request.

In this implementation, the preset media content display interface may be displayed in response to the preset trigger operation of the user, so that the user can view the media content stream in the media content display interface. The preset trigger operation may be a trigger operation on a media content display application, or may be a trigger operation on a function control in the media content display application.

Optionally, the media content display interface may be used to display media content in a media content stream. The media content stream may include a plurality of pieces of media content, and the plurality of pieces of media content may include at least one piece of target media content associated with a target object. The target object includes one or more of live streaming content, a target item, effect content, or a target point of interest.

For example, the target media content may include a target item. Alternatively, the target media content may be obtained through shooting by the user based on a piece of effect content. Alternatively, the publisher of the target media content may perform a live streaming operation in specified time. Alternatively, the target media content is generated by the user based on content acquired at a target point of interest.

The plurality of pieces of media content in the media content stream may be displayed in the media content display interface. The plurality of pieces of media content may be a plurality of adjacent pieces of media content in the media content stream, so that the user can simultaneously view the plurality of pieces of media content in the media content display interface.

Step 102: for each piece of target media content, displaying, in a display area that is in the media content display interface and that is associated with the target media content, a trigger control associated with the target object in response to detecting that the target media content meets a preset display condition. The trigger control is configured to trigger the performing of an interactive operation associated with the target object.

In this embodiment, to diversify display content in the media content stream, a display condition may be preset. For different target objects, there are corresponding different display conditions.

Correspondingly, for each piece of target media content, it may be detected whether the target media content meets the preset display condition. In response to the target media content meeting the preset display condition, the trigger control associated with the target object may be displayed in the display area that is in the media content display interface and that is associated with the target media content. The trigger control may be displayed based on a preset display parameter, where the display parameter may include a display location, a display size, and other content. For an example of actual application, the trigger control may be displayed below the media content.

To diversify the interaction mode in the media content stream, the trigger control may be configured to trigger the performing of the interactive operation associated with the target object. Different target objects may correspond to different interactive operations. Therefore, after the trigger control is displayed in the media content display interface, the user may perform a trigger operation on the trigger control based on the actual requirement, so that the interactive operation associated with the target object can be performed based on the trigger operation of the user.

According to the media content display method provided in this embodiment, in response to the target media content meeting the preset display condition, the trigger control corresponding to the target object associated with the target media content is displayed in the media content display interface. In this way, the display content in the media content display interface can be diversified. In addition, the user can perform the trigger operation on the trigger control, and the interactive operation associated with the target object can be performed based on the trigger operation. In this way, the interaction mode in the media content display interface can be diversified, thereby improving the interaction effect.

Optionally, on the basis of any one of the above-mentioned embodiments, the target object includes live streaming content.

The preset display condition includes at least one of the following:
determining whether the publisher of the target media content is associated with a preset live streaming content calendar;
determining that the target media content does not include a preset live streaming sticker; or
the current user not reserving the live streaming content.

In this embodiment, the target object may be live streaming content. The live streaming content may be historical live streaming performed by the publisher of the target media content, or may be live streaming that the publisher will perform in specified time in the future.

Correspondingly, the preset display condition includes at least one of the following: determining whether the publisher of the target media content is associated with a preset live streaming content calendar; determining that the target media content does not include a preset live streaming sticker; or the current user not reserving the live streaming content.

Optionally, when the publisher conducts live streaming in specified time, or conducts recurring live streaming within a preset time period, the publisher may preset a live streaming content calendar, where the live streaming content calendar may include live streaming description information and/or live streaming time of each live stream. In response to detecting that the publisher presets the preset live streaming content calendar, a trigger control associated with the live streaming content may be displayed in the media content display interface.

Optionally, when publishing the target media content, the publisher may further add a live streaming sticker to the target media content based on the live streaming content, where live streaming description information and/or live streaming time of the live streaming content may be displayed in the live streaming sticker. When displaying the target media content, in response to detecting that the target media content includes the live streaming sticker, only the live streaming sticker may be displayed, to avoid redundancy of information in the media content display interface. On the contrary, in response to detecting that the target media content does not include the live streaming sticker, the trigger control associated with the live streaming content may be displayed in the media content display interface, to enable the user to more intuitively learn of the live streaming content.

Optionally, in response to the user not reserving the live streaming content, the trigger control associated with the live streaming content may be displayed in the media content display interface, to enable the user to more intuitively learn of the live streaming content.

It should be noted that the above-mentioned three display conditions may be implemented separately or in combination. When the three display conditions are implemented separately, specific implementations may be as described in the above-mentioned embodiment. When the three display conditions are implemented in combination, in response to determining that the publisher of the target media content is associated with the preset live streaming content calendar, it is determined that the target media content does not include the preset live streaming sticker, and the current user does not reserve the live streaming content, the trigger control associated with the live streaming content may be displayed in the media content display interface.

According to the media content display method provided in this embodiment, when the preset display condition is met, the trigger control associated with the live streaming content is displayed in the media content display interface. In this way, the user can more intuitively learn of the live streaming content, thereby improving the interaction effect.

Further, on the basis of any one of the above-mentioned embodiments, live streaming description information associated with the live streaming content and a preset reservation control are displayed in the trigger control.

After step 102, the method further includes:
determining live streaming start time of the live streaming content based on the live streaming description information in response to a trigger operation performed on the reservation control by the user; and
sending live streaming start reminder information to the user at the live streaming start time.

In this embodiment, to enable the user to more intuitively learn of the live streaming content, the live streaming description information associated with the live streaming content and the preset reservation control are displayed in the trigger control. The live streaming description information may include a live streaming theme, live streaming time, and other content of the live streaming content.

The live streaming start time of the live streaming content may be determined based on the live streaming description information in response to a trigger operation performed on the reservation control by the user. To prevent the user from missing the live streaming content, the live streaming start reminder information may be sent to the user at the live streaming start time.

Optionally, the live streaming start reminder information may be sent to the user within a preset time range before the live streaming start time. For example, the live streaming start reminder information may be sent to the user ten minutes before live streaming starts.

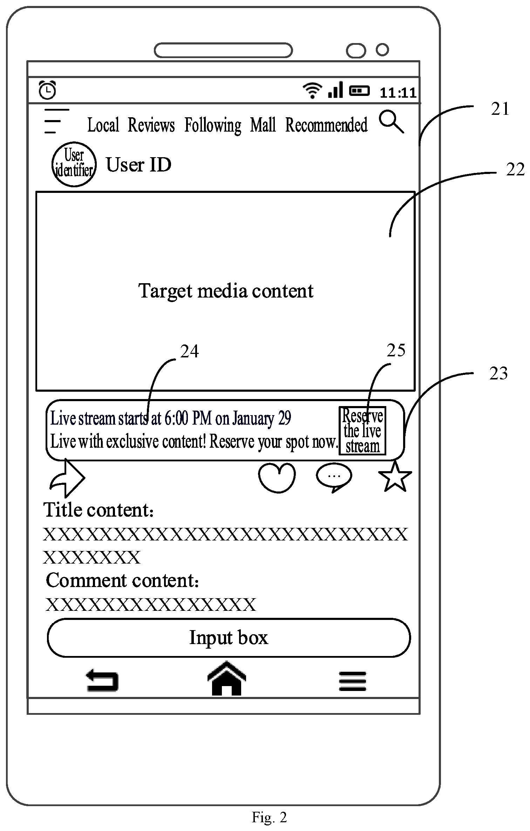

Fig. 2 is a schematic diagram of a display interface according to an embodiment of the present disclosure. As shown in Fig. 2, target media content 22 and a preset trigger control 23 are displayed in a media content display interface 21. The trigger control 23 includes live streaming description information 24 associated with live streaming content and a preset reservation control 25.

According to the media content display method provided in this embodiment, in response to the trigger operation performed on the reservation control by the user, the live streaming start reminder information is sent to the user at the live streaming start time. In this way, the user can learn of the live streaming start time of the live streaming content in a timely manner, thereby avoiding missing the live streaming content, and improving the interaction effect.

Further, on the basis of any one of the above-mentioned embodiments, the live streaming content calendar is associated with a recurring live streaming schedule.

Sending the live streaming start reminder information to the user at the live streaming start time includes:
sending the live streaming start reminder information to the user at live streaming start time of each live stream in the recurring live streaming schedule.

In this embodiment, the publisher of the target media content may conduct live streaming irregularly, or conduct recurring live streaming within a fixed time period. For example, the publisher may conduct live streaming at 7 p.m. every Monday and Wednesday. The publisher may set the recurring live streaming schedule in the live streaming content calendar. Therefore, to prevent the user from missing a plurality of pieces of live streaming content of the publisher, in response to the trigger operation performed on the reservation control by the user, the live streaming start reminder information may be sent to the user at the live streaming start time of each live stream in the recurring live streaming schedule.

Following the above-mentioned example, the publisher may conduct live streaming on every Monday and Wednesday. After the user triggers the reservation control, the live streaming start reminder information may be sent to the user at 7 p.m. every Monday and Wednesday.

According to the media content display method provided in this embodiment, in response to the trigger operation performed on the reservation control by the user, the live streaming start reminder information is sent to the user at the live streaming start time of each live stream. In this way, the user can learn of content of each live stream of the publisher in a timely manner, thereby avoiding missing live streaming content of interest.

Further, on the basis of any one of the above-mentioned embodiments, after step 102, the method further includes:
switching a display state of the reservation control to a non-triggerable state in response to the trigger operation performed on the reservation control by the user.

In this embodiment, to enable the user to more intuitively determine the current reservation status of the live streaming content, the display state of the reservation control may be adjusted in response to the trigger operation performed on the reservation control by the user.

Optionally, when the user does not trigger the trigger control, the trigger control may be in a triggerable state. When the reservation control is in a triggerable state, the reservation control may be highlighted with a preset color. In response to the trigger operation performed on the reservation control by the user, the display state of the reservation control may be switched to the non-triggerable state. When the trigger control is in a non-triggerable state, the trigger control may be displayed in gray.

Optionally, after the display state of the reservation control is switched to the non-triggerable state, the display state of the reservation control may be switched to the triggerable state in response to another trigger operation performed on the reservation control by the user.

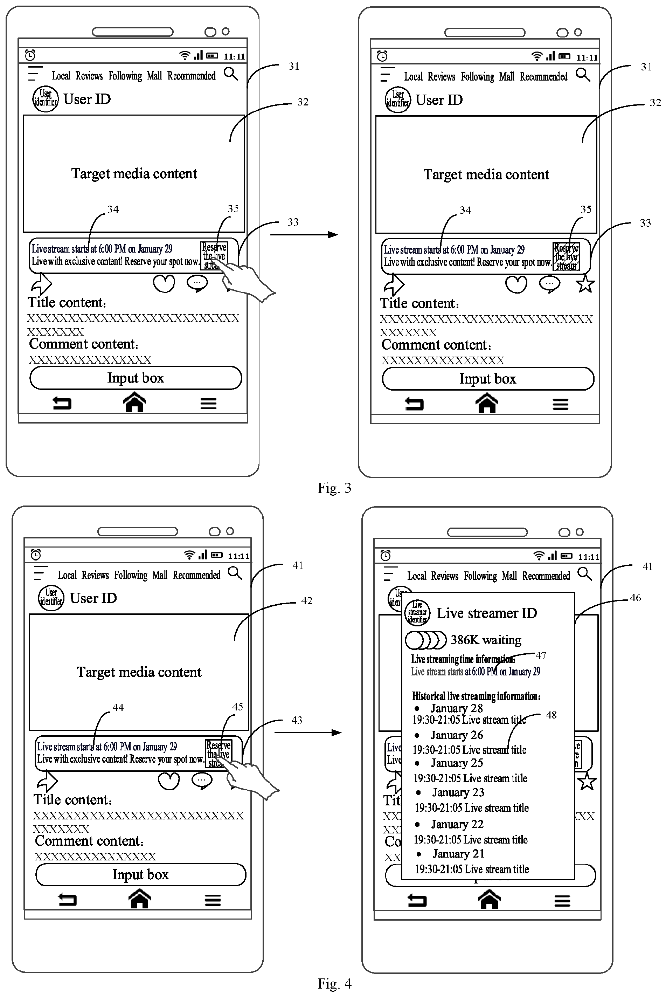

Fig. 3 is a schematic diagram of an interface interaction according to an embodiment of the present disclosure. As shown in Fig. 3, target media content 32 and a preset trigger control 33 are displayed in a media content display interface 31. The trigger control 33 includes live streaming description information 34 associated with live streaming content and a preset reservation control 35. The display state of the reservation control 35 may be switched to a non-triggerable state in response to a trigger operation performed on the reservation control 35 by the user.

According to the media content display method provided in this embodiment, the display state of the reservation control is switched to the non-triggerable state in response to the trigger operation performed on the reservation control by the user. In this way, the user can more intuitively determine the current reservation status of the live streaming content based on the display state of the reservation control, and the interaction mode and display content in the media content display interface are diversified, thereby improving the interaction effect.

Further, on the basis of any one of the above-mentioned embodiments, after step 102, the method further includes:
in response to a trigger operation performed on the live streaming description information by the user, displaying a live streaming content display interface, and displaying, in the live streaming content display interface, live streaming time information and/or historical live streaming information of the publisher.

In this embodiment, the user may further perform the trigger operation on the live streaming description information in the trigger control. The live streaming content display interface may be displayed in response to the trigger operation, and the user may learn of more live streaming information of the publisher in the live streaming content display interface. The live streaming time information and/or historical live streaming information of the publisher may be displayed in the live streaming content display interface.

For example, the live streaming content display interface may be displayed in response to the trigger operation performed on the live streaming description information. Theme information and time information corresponding to a next live stream of the publisher as well as theme information and time information corresponding to a plurality of historical live streams of the publisher may be displayed in the live streaming content display interface.

Fig. 4 is another schematic diagram of interface interaction according to an embodiment of the present disclosure. As shown in Fig. 4, target media content 42 and a preset trigger control 43 are displayed in a media content display interface 41. The trigger control 43 includes live streaming description information 44 associated with live streaming content and a preset reservation control 45. A live streaming content display interface 46 may be displayed, and live streaming time information 47 and historical live streaming information 48 of the publisher are displayed in the live streaming content display interface 46, in response to a trigger operation performed on the live streaming description information 44 by the user.

According to the media content display method provided in this embodiment, the live streaming content display interface is displayed in response to the trigger operation performed on the live streaming description information by the user. In this way, the user can fully learn of content of a live stream that the publisher is about to conduct and historical live streaming content in the live streaming content display interface, and the interaction mode in the media content display interface is diversified, thereby improving the interaction effect.

Optionally, on the basis of any one of the above-mentioned embodiments, the target object includes effect content.

The preset display condition includes at least one of the following:
the target media content including the effect content; or
the user not having used the effect content.

In this embodiment, the target object includes effect content, and the target media content may be media content generated based on the effect content.

Correspondingly, the display condition may be that the target media content includes the effect content and/or the user has not used the effect content.

Optionally, the display condition may alternatively be that publish time of the effect content is within a preset time range. Alternatively, the display condition may be that the publisher performs a trigger operation on a preset effect display control when publishing the target media content. Alternatively, the display condition may be that a quantity of times the effect content is used within a preset time period exceeds a preset quantity threshold, etc.

For example, when the target media content is displayed, in response to detecting that the target media content is media content generated based on the effect content and the user has not used the effect content, a trigger control associated with the effect content may be displayed in the media content display interface.

According to the media content display method provided in this embodiment, in response to meeting the preset display condition, the trigger control associated with the effect content is displayed in the media content display interface. In this way, the display content in the media content display interface can be diversified, and the interaction mode in the media content display interface can be diversified, thereby improving the interaction effect.

Further, on the basis of any one of the above-mentioned embodiments, after step 102, the method further includes:

in response to a trigger operation performed on the trigger control by the user, displaying a media content acquisition interface, and displaying, in the media content acquisition interface, a display effect associated with the effect content, to cause the user to generate media content in the media content acquisition interface based on the effect content.

In this embodiment, the user may perform the trigger operation on the trigger control based on an actual requirement, to quickly acquire media content based on the effect content.

Correspondingly, the media content acquisition interface may be displayed in response to the trigger operation performed on the trigger control by the user, and the display effect of the effect content is displayed in the media content acquisition interface, so that the user can more intuitively view the display effect of the effect content and a shooting effect. In addition, the media content acquisition interface may further include a content generation control, and the content generation control may include a content acquisition control and/or a content upload control. The user may acquire media content based on the effect content and a trigger operation performed on the content acquisition control. Alternatively, the user may upload media content based on the content upload control, and apply an effect to the uploaded media content based on the effect content, to generate media content matching the effect content.

In a possible implementation, a content display interface may be displayed in response to a trigger operation performed on the trigger control associated with the effect content by the user. The content display interface may include a plurality of pieces of media content generated based on the effect content. The user may view the media content in the content display interface based on the actual requirement.

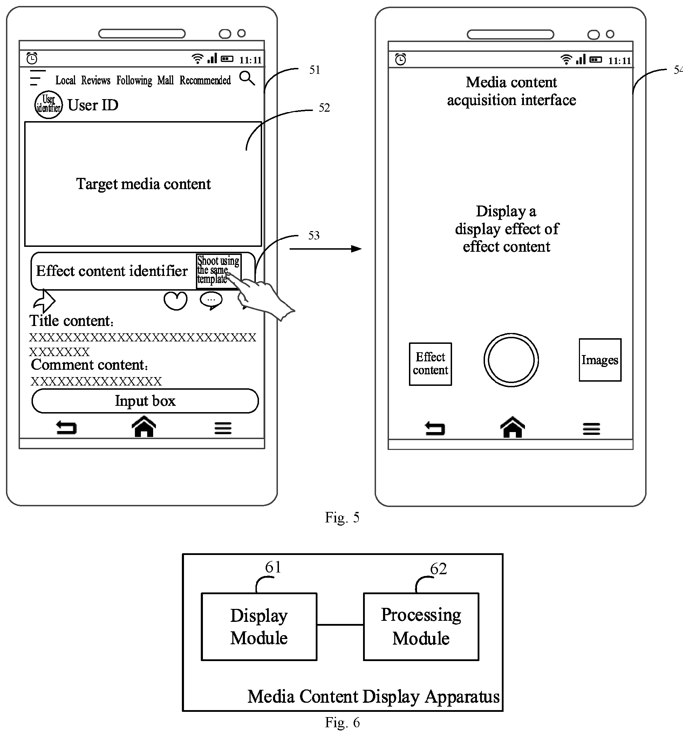

Fig. 5 is another schematic diagram of interface interaction according to an embodiment of the present disclosure. As shown in Fig. 5, target media content 52 and a trigger control 53 associated with effect content are displayed in a media content display interface 51. A media content acquisition interface 54 may be jumped to in response to a trigger operation performed on the trigger control 53 by the user. The media content acquisition interface 54 may display a display effect of effect content, so that the user can generate media content in the media content acquisition interface based on the effect content.

According to the media content display method provided in this embodiment, the media content acquisition interface is displayed in response to the trigger operation performed on the trigger control by the user. In this way, the user can quickly implement, through the trigger control, a media content acquisition operation based on the effect content, thereby improving media content acquisition efficiency and making media content acquisition better meet a personalized requirement of the user.

Optionally, on the basis of any one of the above-mentioned embodiments, the target object includes a target item.

The preset display condition includes at least one of the following:
detecting that the target media content includes the target item; or
the user paying attention to a target feature associated with the target item.

In this embodiment, the target object may be a target item. For example, the target item may be a product.

When the target object is the target item, the display condition may be that it is detected that the target media content includes the target item and/or the user pays attention to a target feature associated with the target item.

For example, the target item may be a product. In response to detecting that the target media content includes the product, and the user pays attention to a target feature of the product, a trigger control associated with the product may be displayed in the target media content display interface. The trigger control may be a view control corresponding to the product, so that the user can view detailed information of the product through the trigger control.

According to the media content display method provided in this embodiment, in response to meeting the preset display condition, the trigger control associated with the target item is displayed in the media content display interface. In this way, the display content in the media content display interface can be diversified, and the interaction mode in the media content display interface can be diversified, thereby improving the interaction effect.

Further, on the basis of any one of the above-mentioned embodiments, after step 102, the method further includes:
in response to a trigger operation performed on the trigger control by the user, displaying an information display interface associated with the target item, and displaying, in the information display interface, associated content and/or item transaction information of the target item.

In this embodiment, after the trigger control associated with the target item is displayed in the media content display interface, the user can view associated information of the target item through the trigger control. The information display interface associated with the target item is displayed in response to the trigger operation performed on the trigger control by the user. The information display interface may display the associated content and/or item transaction information of the target item.

For an example of actual application, the target item may be a product, and a product detail page corresponding to the product may be displayed in response to the trigger operation performed on the trigger control by the user. The product and/or transaction information of the product may be displayed on the product detail page.

According to the media content display method provided in this embodiment, the information display interface associated with the target item is displayed in response to the trigger operation performed on the trigger control by the user. In this way, the user can quickly view a target item of interest through the trigger control.

Fig. 6 is a schematic structural diagram of a media content display apparatus according to an embodiment of the present disclosure. As shown in Fig. 6, the apparatus includes: a display module 61 and a processing module 62. The display module 61 is configured to display a preset media content display interface in response to a preset trigger operation of a current user, where the media content display interface includes a plurality of pieces of media content in a preset media content stream, the media content stream includes at least one piece of target media content associated with a target object, and the plurality of pieces of media content are adjacent pieces of media content in the preset media content stream. The processing module 62 is configured to, for each piece of target media content, display, in a display area that is in the media content display interface and that is associated with the target media content, a trigger control associated with the target object in response to detecting that the target media content meets a preset display condition, where the trigger control is configured to trigger the performing of an interactive operation associated with the target object.

Further, on the basis of any one of the above-mentioned embodiments, the target object includes one or more of live streaming content, a target item, effect content, or a target point of interest.

Further, on the basis of any one of the above-mentioned embodiments, the target object includes live streaming content. The preset display condition includes at least one of the following: determining whether a publisher of the target media content is associated with a preset live streaming content calendar; determining that the target media content does not include a preset live streaming sticker; or the current user not reserving the live streaming content.

Further, on the basis of any one of the above-mentioned embodiments, live streaming description information associated with the live streaming content and a preset reservation control are displayed on the trigger control. The apparatus further includes: a determining module configured to determine live streaming start time of the live streaming content based on the live streaming description information in response to a trigger operation performed on the reservation control by the user; and a sending module configured to send live streaming start reminder information to the user at the live streaming start time.

Further, on the basis of any one of the above-mentioned embodiments, the live streaming content calendar is associated with a recurring live streaming schedule. The sending module is configured to send the live streaming start reminder information to the user at live streaming start time of each live stream in the recurring live streaming schedule.

Further, on the basis of any one of the above-mentioned embodiments, the apparatus further includes: a switching module configured to switch a display state of the reservation control to a non-triggerable state in response to the trigger operation performed on the reservation control by the user.

Further, on the basis of any one of the above-mentioned embodiments, the apparatus is further configured to, in response to a trigger operation performed on the live streaming description information by the user, display a live streaming content display interface, and display, in the live streaming content display interface, live streaming time information and/or historical live streaming information of the publisher.

Further, on the basis of any one of the above-mentioned embodiments, the target object includes effect content. The preset display condition includes at least one of the following: the target media content including the effect content; or the user not using the effect content.

Further, on the basis of any one of the above-mentioned embodiments, the apparatus further includes a display module configured to, in response to a trigger operation performed on the trigger control by the user, display a media content acquisition interface, and display, in the media content acquisition interface, a display effect associated with the effect content, to cause the user to generate media content in the media content acquisition interface based on the effect content.

Further, on the basis of any one of the above-mentioned embodiments, the target object includes a target item. The preset display condition includes at least one of the following: detecting that the target media content includes the target item; or the user paying attention to a target feature associated with the target item.

Further, on the basis of any one of the above-mentioned embodiments, the apparatus further includes a display module configured to, in response to a trigger operation performed on the trigger control by the user, display an information display interface associated with the target item, and display, in the information display interface, associated content and/or item transaction information of the target item.

The apparatus provided in this embodiment may be configured to perform the technical solution of the above-mentioned method embodiment. The implementation principle and technical effects thereof are similar, and are not described herein again in this embodiment.

To implement the above-mentioned embodiments, an embodiment of the present disclosure further provides an electronic device. The electronic device includes: a processor and a memory. The memory stores a computer-executable instruction.

The processor executes the computer-executable instruction stored in the memory, to cause the processor to perform the media content display method according to any one of the above-mentioned embodiments.

The device provided in this embodiment may be configured to perform the technical solution of the above-mentioned method embodiment. The implementation principle and technical effects thereof are similar, and are not described herein again in this embodiment.

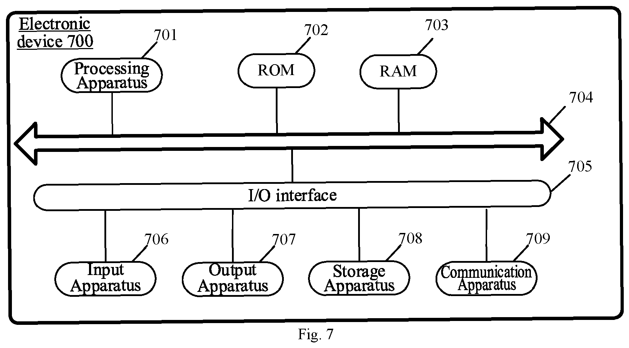

Fig. 7 is a schematic structural diagram of an electronic device according to an embodiment of the present disclosure. As shown in Fig. 7, the electronic device 700 may be a terminal device or a server. The terminal device may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (such as a vehicle navigation terminal), and a fixed terminal such as a digital TV and a desktop computer. The electronic device shown in Fig. 7 is merely an example, and shall not impose any limitation on the function and scope of use of the embodiments of the present disclosure.

As shown in Fig. 7, the electronic device 700 may include a processing apparatus (for example, a central processing unit or a graphics processing unit) 701 that may perform a variety of appropriate actions and processing based on a program stored in a read-only memory (ROM) 702 or a program loaded from a storage apparatus 708 into a random access memory (RAM) 703. The RAM 703 further has various programs and data required for the operation of the electronic device 700 stored therein. The processing apparatus 701, the ROM 702, and the RAM 703 are connected to one another through a bus 704. An input/output (I/O) interface 705 is also connected to the bus 704.

Generally, the following apparatus may be connected to the I/O interface 705: an input apparatus 706 including, for example, a touchscreen, a touchpad, a keyboard, a mouse, a camera, a microphone, an accelerometer, and a gyroscope; an output apparatus 707 including, for example, a liquid crystal display (LCD), a speaker, and a vibrator; the storage apparatus 708 including, for example, a magnetic tape and a hard disk drive; and a communication apparatus 709. The communication apparatus 709 may allow the electronic device 700 to perform wireless or wired communication with other devices to exchange data. Although Fig. 7 shows the electronic device 700 having various apparatus, it should be understood that it is not required to implement or have all of the shown apparatus. It may be an alternative to implement or have more or fewer apparatus.

In particular, according to the embodiments of the present disclosure, the process described above with reference to the flowchart may be implemented as a computer software program. For example, an embodiment of the present disclosure includes a computer program product, which includes a computer program carried on a computer-readable medium, where the computer program includes program code for performing the method shown in the flowchart. In such an embodiment, the computer program may be downloaded and installed from a network through the communication apparatus 709, installed from the storage apparatus 708, or installed from the ROM 702. When the computer program is executed by the processing apparatus 701, the above-mentioned functions defined in the method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or having a program stored therein which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

To implement the above-mentioned embodiments, an embodiment of the present disclosure further provides a computer-readable storage medium having computer-executable instructions stored thereon that, when executed by a processor, cause the media content display method according to any one of the above-mentioned embodiments to be implemented.

To implement the above-mentioned embodiments, an embodiment of the present disclosure further provides a computer program product including a computer program that, when executed by a processor, causes the media content display method according to any one of the above-mentioned embodiments to be implemented.

An embodiment of the present disclosure further provides a computer-readable storage medium having a computer-executable instruction stored thereon that, when executed by a processor, causes the media content display method according to any one of the above-mentioned embodiments to be implemented.

An embodiment of the present disclosure further provides a computer program product including a computer program that, when executed by a processor, causes the media content display method according to any one of the above-mentioned embodiments to be implemented.

The above-mentioned computer-readable medium may be included in the above-mentioned electronic device. Alternatively, the computer-readable medium may exist independently, without being assembled into the electronic device.

The above-mentioned computer-readable medium carries one or more programs that, when executed by the electronic device, cause the electronic device to perform the method shown in the above-mentioned embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

In a first aspect, according to one or more embodiments of the present disclosure, a media content display method is provided. The method includes:
displaying a preset media content display interface in response to a preset trigger operation of a current user, where the media content display interface includes a plurality of pieces of media content in a preset media content stream, the media content stream includes at least one piece of target media content associated with a target object, and the plurality of pieces of media content are adjacent pieces of media content in the preset media content stream; and
for each piece of target media content, displaying, in a display area that is in the media content display interface and that is associated with the target media content, a trigger control associated with the target object in response to detecting that the target media content meets a preset display condition, where the trigger control is configured to trigger the performing of an interactive operation associated with the target object.

According to one or more embodiments of the present disclosure, the target object includes one or more of live streaming content, a target item, effect content, or a target point of interest.

According to one or more embodiments of the present disclosure, the target object includes live streaming content.

The preset display condition includes at least one of the following:
determining whether a publisher of the target media content is associated with a preset live streaming content calendar;
determining that the target media content does not include a preset live streaming sticker; or
the current user not reserving the live streaming content.

According to one or more embodiments of the present disclosure, live streaming description information associated with the live streaming content and a preset reservation control are displayed on the trigger control.

After displaying, in the display area that is in the media content display interface and that is associated with the target media content, the trigger control associated with the target object, the media content display method further includes:
determining live streaming start time of the live streaming content based on the live streaming description information in response to a trigger operation performed on the reservation control by the user; and
sending live streaming start reminder information to the user at the live streaming start time.

According to one or more embodiments of the present disclosure, the live streaming content calendar is associated with a recurring live streaming schedule.

Sending the live streaming start reminder information to the user at the live streaming start time includes:
sending the live streaming start reminder information to the user at live streaming start time of each live stream in the recurring live streaming schedule.

According to one or more embodiments of the present disclosure, after displaying, in the display area that is in the media content display interface and that is associated with the target media content, the trigger control associated with the target object, the media content display method further includes:
switching a display state of the reservation control to a non-triggerable state in response to the trigger operation performed on the reservation control by the user.

According to one or more embodiments of the present disclosure, after displaying, in the display area that is in the media content display interface and that is associated with the target media content, the trigger control associated with the target object, the media content display method further includes:
in response to a trigger operation performed on the live streaming description information by the user, displaying a live streaming content display interface, and displaying, in the live streaming content display interface, live streaming time information and/or historical live streaming information of the publisher.

According to one or more embodiments of the present disclosure, the target object includes effect content.

The preset display condition includes at least one of the following:
the target media content including the effect content; or
the user not using the effect content.

According to one or more embodiments of the present disclosure, after displaying, in the display area that is in the media content display interface and that is associated with the target media content, the trigger control associated with the target object, the media content display method further includes:
in response to a trigger operation performed on the trigger control by the user, displaying a media content acquisition interface, and displaying, in the media content acquisition interface, a display effect associated with the effect content, to cause the user to generate media content in the media content acquisition interface based on the effect content.

According to one or more embodiments of the present disclosure, the target object includes a target item.

The preset display condition includes at least one of the following:
detecting that the target media content includes the target item; or
the user paying attention to a target feature associated with the target item.

According to one or more embodiments of the present disclosure, after displaying, in the display area that is in the media content display interface and that is associated with the target media content, the trigger control associated with the target object, the media content display method further includes:
in response to a trigger operation performed on the trigger control by the user, displaying an information display interface associated with the target item, and displaying, in the information display interface, associated content and/or item transaction information of the target item.

In a second aspect, according to one or more embodiments of the present disclosure, a media content display apparatus is provided. The apparatus includes:
a display module configured to display a preset media content display interface in response to a preset trigger operation of a current user, where the media content display interface includes a plurality of pieces of media content in a preset media content stream, the media content stream includes at least one piece of target media content associated with a target object, and the plurality of pieces of media content are adjacent pieces of media content in the preset media content stream; and
a processing module configured to for each piece of target media content, display, in a display area that is in the media content display interface and that is associated with the target media content, a trigger control associated with the target object in response to detecting that the target media content meets a preset display condition, where the trigger control is configured to trigger the performing of an interactive operation associated with the target object.

According to one or more embodiments of the present disclosure, the target object includes one or more of live streaming content, a target item, effect content, or a target point of interest.

According to one or more embodiments of the present disclosure, the target object includes live streaming content.

The preset display condition includes at least one of the following:
determining whether a publisher of the target media content is associated with a preset live streaming content calendar;
determining that the target media content does not include a preset live streaming sticker; or
the current user not reserving the live streaming content.

According to one or more embodiments of the present disclosure, live streaming description information associated with the live streaming content and a preset reservation control are displayed on the trigger control.

The apparatus further includes:
a determining module configured to determine live streaming start time of the live streaming content based on the live streaming description information in response to a trigger operation performed on the reservation control by the user; and
a sending module configured to send live streaming start reminder information to the user at the live streaming start time.

According to one or more embodiments of the present disclosure, the live streaming content calendar is associated with a recurring live streaming schedule.

The sending module is configured to:
send the live streaming start reminder information to the user at live streaming start time of each live stream in the recurring live streaming schedule.

According to one or more embodiments of the present disclosure, the apparatus further includes:
a switching module configured to switch a display state of the reservation control to a non-triggerable state in response to the trigger operation performed on the reservation control by the user.

According to one or more embodiments of the present disclosure, the apparatus is further configured to:
in response to a trigger operation performed on the live streaming description information by the user, display a live streaming content display interface, and display, in the live streaming content display interface, live streaming time information and/or historical live streaming information of the publisher.

According to one or more embodiments of the present disclosure, the target object includes effect content.

The preset display condition includes at least one of the following:
the target media content including the effect content; or
the user not using the effect content.

According to one or more embodiments of the present disclosure, the apparatus further includes:
a display module configured to, in response to a trigger operation performed on the trigger control by the user, display a media content acquisition interface, and display, in the media content acquisition interface, a display effect associated with the effect content, to cause the user to generate media content in the media content acquisition interface based on the effect content.

According to one or more embodiments of the present disclosure, the target object includes a target item.

The preset display condition includes at least one of the following:
detecting that the target media content includes the target item; or
the user paying attention to a target feature associated with the target item.

According to one or more embodiments of the present disclosure, the apparatus further includes:
a display module configured to, in response to a trigger operation performed on the trigger control by the user, display an information display interface associated with the target item, and display, in the information display interface, associated content and/or item transaction information of the target item.

In a third aspect, according to one or more embodiments of the present disclosure, an electronic device is provided. The electronic device includes: at least one processor and a memory.

The memory stores a computer-executable instruction.

The at least one processor executes the computer-executable instruction stored in the memory, to cause the at least one processor to perform the media content display method according to the first aspect and various possible designs of the first aspect.

In a fourth aspect, according to one or more embodiments of the present disclosure, a computer-readable storage medium is provided. The computer-readable storage medium has a computer-executable instruction stored thereon that, when executed by a processor, causes the media content display method according to the first aspect and various possible designs of the first aspect to be implemented.

In a fifth aspect, according to one or more embodiments of the present disclosure, a computer program product is provided. The computer program product includes a computer program that, when executed by a processor, causes the media content display method according to the first aspect and various possible designs of the first aspect to be implemented.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. A media content display method, comprising:
displaying a preset media content display interface in response to a preset trigger operation of a current user, wherein the media content display interface comprises a plurality of pieces of media content in a preset media content stream, the media content stream comprises at least one piece of target media content associated with a target object, and the plurality of pieces of media content are adjacent pieces of media content in the preset media content stream; and
for each piece of target media content, displaying, in a display area that is in the media content display interface and that is associated with the target media content, a trigger control associated with the target object in response to detecting that the target media content meets a preset display condition, wherein the trigger control is configured to trigger performing of an interactive operation associated with the target object.

2. The media content display method according to claim 1, wherein the target object comprises one or more of live streaming content, a target item, effect content, or a target point of interest.

3. The media content display method according to claim 1, wherein the target object comprises live streaming content; and
the preset display condition comprises at least one of following:
determining whether a publisher of the target media content is associated with a preset live streaming content calendar;
determining that the target media content does not comprise a preset live streaming sticker; or
the current user not reserving the live streaming content.

4. The media content display method according to claim 3, wherein live streaming description information associated with the live streaming content and a preset reservation control are displayed on the trigger control; and
after displaying, in the display area that is in the media content display interface and that is associated with the target media content, the trigger control associated with the target object, the media content display method further comprises:
determining live streaming start time of the live streaming content based on the live streaming description information in response to a trigger operation performed on the reservation control by the user; and
sending live streaming start reminder information to the user at the live streaming start time.

5. The media content display method according to claim 4, wherein the live streaming content calendar is associated with a recurring live streaming schedule; and
sending the live streaming start reminder information to the user at the live streaming start time comprises:
sending the live streaming start reminder information to the user at live streaming start time of each live stream in the recurring live streaming schedule.

6. The media content display method according to claim 4 or 5, wherein after displaying, in the display area that is in the media content display interface and that is associated with the target media content, the trigger control associated with the target object, the media content display method further comprises:
switching a display state of the reservation control to a non-triggerable state in response to the trigger operation performed on the reservation control by the user.

7. The media content display method according to any one of claims 4 to 6, wherein after displaying, in the display area that is in the media content display interface and that is associated with the target media content, the trigger control associated with the target object, the media content display method further comprises:
in response to a trigger operation performed on the live streaming description information by the user, displaying a live streaming content display interface, and displaying, in the live streaming content display interface, live streaming time information and/or historical live streaming information of the publisher.

8. The media content display method according to claim 1, wherein the target object comprises effect content; and
the preset display condition comprises at least one of following:
the target media content comprising the effect content; or
the user not using the effect content.

9. The media content display method according to claim 8, wherein after displaying, in the display area that is in the media content display interface and that is associated with the target media content, the trigger control associated with the target object, the media content display method further comprises:
in response to a trigger operation performed on the trigger control by the user, displaying a media content acquisition interface, and displaying, in the media content acquisition interface, a display effect associated with the effect content, to cause the user to generate media content in the media content acquisition interface based on the effect content.

10. The media content display method according to claim 1, wherein the target object comprises a target item; and
the preset display condition comprises at least one of following:
detecting that the target media content comprises the target item; or
the user paying attention to a target feature associated with the target item.

11. The media content display method according to claim 10, wherein after displaying, in the display area that is in the media content display interface and that is associated with the target media content, the trigger control associated with the target object, the media content display method further comprises:
in response to a trigger operation performed on the trigger control by the user, displaying an information display interface associated with the target item, and displaying, in the information display interface, associated content and/or item transaction information of the target item.

12. A media content display apparatus, comprising:
a display module configured to display a preset media content display interface in response to a preset trigger operation of a current user, wherein the media content display interface comprises a plurality of pieces of media content in a preset media content stream, the media content stream comprises at least one piece of target media content associated with a target object, and the plurality of pieces of media content are adjacent pieces of media content in the preset media content stream; and
a processing module configured to, for each piece of target media content, display, in a display area that is in the media content display interface and that is associated with the target media content, a trigger control associated with the target object in response to detecting that the target media content meets a preset display condition, wherein the trigger control is configured to trigger performing of an interactive operation associated with the target object.

13. An electronic device, comprising: a processor and a memory,
wherein the memory stores a computer-executable instruction, and
the processor executes the computer-executable instruction stored in the memory, to cause the processor to perform the media content display method according to any one of claims 1 to 11.

14. A computer-readable storage medium having a computer-executable instruction stored thereon, wherein the computer-executable instruction, upon being executed by a processor, cause the media content display method according to any one of claims 1 to 11 to be implemented.

15. A computer program product, comprising a computer program, wherein the computer program, upon being executed by a processor, causes the media content display method according to any one of claims 1 to 11 to be implemented.
